(19) Europäisches Patentamt
European Patent Office
Office européen des brevets

(11) Publication number: 0 305 007 A2

(12) **EUROPEAN PATENT APPLICATION**

(21) Application number: 88201789.0

(22) Date of filing: 23.08.88

(51) Int. Cl.4: C08F 299/04 , C09D 3/00 , C08L 67/08

(30) Priority: 28.08.87 NL 8702017

(43) Date of publication of application: 01.03.89 Bulletin 89/09

(84) Designated Contracting States: AT BE CH DE ES FR GB IT LI NL SE

(71) Applicant: STAMICARBON B.V.
Mijnweg 1
NL-6167 AC Geleen(NL)

(72) Inventor: Hofland, Adriaan
Chopinstraat 49
NL-8031 ZH Zwolle(NL)
Inventor: Paauwe, Joannes Marius
Luzacware 9
NL-8014 PJ Zwolle(NL)

(54) **Resin composition based on a polymer and an ester.**

(57) The invention relates to a resin composition based on a polymer and an ester of an unsaturated fatty acid and an alcohol containing a terminal unsaturation, characterized in that, as ester, the resin composition contains a compound with formula (1):

$$R^1 - \overset{O}{\overset{\|}{C}} - O - R^2 \qquad (1)$$

where:
$R^1$ is an alkyl radical with 10-24 carbon atoms and at least one non-terminal ethylenically unsaturated bond and
$R^2$ is an organic group comprising two or more groups according to formulas (2) and/or (3):

$$- O - \overset{O}{\overset{\|}{C}} - \overset{R^3}{\overset{|}{C}} = CH_2 \qquad (2)$$

$$- C_6H_4 - \overset{R^3}{\overset{|}{C}} = CH_2 \qquad (3)$$

where:
$R^3$ is a hydrogen or an alkyl radical with 1-4 carbon atoms.
The invention also relates to the ester as such.

EP 0 305 007 A2

# RESIN COMPOSITION BASED ON A POLYMER AND AN ESTER

The invention relates to an ester of an unsaturated fatty acid and an alcohol that contains a terminal unsaturation and a resin composition based on a polymer and an aforementioned ester.

Such an ester and resin composition is known from US-A-4311624. This publication describes a resin composition, which contains filmforming components such as drying oils, alkyd resins and vinyl addition polymers, and a mixture of (a) a dicyclopentenyloxyalkyl ester of an ethylenically unsaturated mono- or dicarboxylic acid and (b) a (meth)acryloxyalkyl ester of an unsaturated fatty acid. The compounds mentioned as (a) and (b) are also known as reactive diluents.

Such resin compositions are particularly used as binding agents in coating compositions. Nowadays, efforts are made to use coating compositions with a lower percentage of, or even without, volatile solvents on account of the environmental problems connected with the use of these organic solvents and the associated environmental laws. One of the possibilities of solving these problems is to use reactive diluents in the resin compositions for coating compositions. These diluents are usually compounds with a low viscosity and a high boiling point, or low saturated vapour pressure, which act as solvent during the process but can subsequently also be polymerized along with the rest of the compound. In this manner the environmental pollution caused by the conventional solvents can be reduced. The requirements to be met by these compounds are such that on the one hand they can be used as crosslinking agents and that, on the other, they contribute towards the good properties that a coating composition is required to have.

A disadvantage of the known reactive diluents, the resin compositions based on polymers and these diluents and the resulting coating compositions is that the monomers used as reactive diluents are too volatile and/or the properties of the resulting coating compositions such as the drying properties do not meet the requirements and/or the monomers to be used as reactive diluents are difficult to prepare and very expensive and/or the monomers are insufficiently soluble and do not mix sufficiently with the polymers and/or the reactive diluents do not have an optimum diluting effect.

The aim of the invention is to provide a reactive diluent and a resin composition based on a polymer and an ester as a reactive diluent that does not present the aforementioned disadvantages.

The resin composition according to the invention is characterized in that, the resin composition contains as ester a compound with formula (1):

$$R^1 - \overset{\displaystyle O}{\overset{\Vert}{C}} - O - R^2 \qquad (1)$$

where:

$R^1$ is an alkyl radical with 10-24 carbon atoms and at least one non-terminal ethylenically unsaturated bond and

$R^2$ is an organic group comprising two or more groups according to formulas (2) and/or (3):

$$- O - \overset{\displaystyle O}{\overset{\Vert}{C}} - \overset{\displaystyle R^3}{\overset{|}{C}} = CH_2 \qquad (2)$$

$$- C_6H_4 - \overset{\displaystyle R^3}{\overset{|}{C}} = CH_2 \qquad (3)$$

where:

$R^3$ is a hydrogen or an alkyl radical with 1-4 carbon atoms.

According to a preferred embodiment of the invention $R^1$ is an alkyl group with 16-20 carbon atoms.

According to another preferred embodiment of the invention the resin composition contains as ester a component in which $R^1$ comprises the structural unit $-CH=CH-CH_2-CH=CH-$.

$R^2$ is preferably the bismethacrylic ester of a polyfunctional alcohol derivative.

The coating compositions that are obtained by using the ester according to the invention present unexpectedly good drying proper ties, particularly in comparison with the compositions based on the esters according to the state of the art, which contain only one ethylenically unsaturated end group.

The weight ratio of the ester and the polymer may in absence of volatile organic solvents (the so-called '100%-solid' systems) vary within wide limits. If a very low viscosity is desired, up to 80% ester may be

used.

According to a preferred embodiment of the invention the resin composition is substantially 100%-solid. If the ester is combined with conventional solvents such as white spirit, or with a polymer or oligomer with a low melting point, 1% by weight ester as reactive diluent may already be advantageous.

According to a preferred embodiment of the invention, the resin composition contains 20-99 wt% polymer and 1-80 wt% ester (the weight percentages being based on the total amount of polymer and ester).

Preferably the resin composition contains 50-95 wt% polymer and 5-50 wt% ester, in particular 70-90 wt% polymer and 10-30 wt% ester.

According to another preferred embodiment of the invention the ester is applied in combination with an oligomer based on for example trimellitic acid anhydride, pentaerytritol and soya bean fatty acid. The resin composition contains preferably 20-99% by weight polymer, 5-50% by weight ester and 0,1-50% by weight oligomer. The weight ratio in the oligomer between trimellitic acid anhydride, pentaerytritol and soya bean fatty acid is for example 1 : 3 : 15.

As polymer, the resin composition according to the invention may contain any polymer that is cured by radical polymerization. In particular, all polymers that are air dryable are extremely suitable, for instance an alkyd resin, a (modified) condensation polymer and a vinyl addition polymer. Instead of the polymer, drying oil (or oils) may be used.

According to a preferred embodiment of the invention, an alkyd resin is used as polymer. Alkyd resins are prepared by esterifying polyalcohols and polybasic acids or their anhydrides, usually also with fatty acids. Most alkyd resins are very viscous; for practical use they are therefore sold in solution. The properties are in the first place determined by the nature and proportion of the alcohols and acids used and by the degree of condensation. Certain modifications in the composition, such as styrene and silicone alkyds, result in products with special properties. Alkyd resins obtained by esterifying a dibasic acid, mostly phthalic acid, and a trivalent alcohol, usually glycerol, are thermosetting brittle resins that are soluble in alcohol at a low degree of condensation. Those obtained by esterifying a bivalent alcohol, for example glycol, and a dibasic acid, such as phthalic acid, whether or not with addition of a non-setting fatty acid, are thermoplastic resins which dissolve in hydrocarbons and are used mainly as plasticizers. The alkyd resins can be classified in fatty alkyds, with a fatty acid content of more than 60%, semi-fatty alkyds with a fatty acid content of between 45 and 60% and lean alkyds with a fatty acid content of less than 45%. The consistency varies from syrupy in the case of the fatty alkyd resins to brittle in the case of the lean alkyd resins. In the paint industry alkyd resins are often used as binding agents: favourable properties are, for instance, their fast drying and curing. The great variety of types presents the possibility of attuning the choice to the purpose (so-called tailor-made types): lean, fast-drying types are used, for instance, for spray paints for industry; fatter types that dry somewhat slower are on the other hand very suitable for application by brush and, consequently, for house paints. In this manner each of the many types has its own field of application. According to a preferred embodiment the alkyd resins which are prepared in the presence of 3-20 wt% monoalcohol with between 5 and 13 carbon atoms, such as hexanol, nonanol or decanol, are applied. Among other effects, this increases the solubility in alkanes. Alkanes are less harmful solvents than solvents containing aromatics.

Alkyd resins are combined with, for instance, carbamide and melamine resins for use in stoving varnishes; in combination with cellulose nitrate (nitrocellulose) they yield the so-called combination lacquers. One way of preparing modified alkyd resins is heating a bivalent acid or its anhydride with a multivalent alcohol and a fatty acid. In the fatty acid method dicarboxylic acid (anhydride), polyalcohol and fatty acid are heated to abt. 250¤C until the required acid number and the required viscosity are obtained. In the monoglyceride method, the fatty acids obtained after esterification of a suitable oil are used for the modification with glycerol to monoglyceride.

Then dicarboxylic acid (anhydride) is added and the mixture is treated in the same manner as in the fatty acid method. In the solvent method the reaction is carried out in the presence of a solvent that is immiscible with water. The polyalcohols used most often are glycerol, pentaerythritol, trimethylolpropane and sorbitol. The principal polycarboxylic acids are, for instance, phthalic acid (anhydride) and maleic acid; the fatty acids of linseed, ricinus, soya bean and coconut oil are often used as fatty acids. Ester, copal and phenol resins, styrene and silicones may be used as modifying agents.

(Pre)polymers based on isocyanate groups, if so desired modified with acrylates or methacrylates, hydroxyterminated polyethers or polyesters, if so desired modified with acrylates or methacrylates, epoxy resins, if so desired modified with acrylates or methacrylates, or polyesters based on epoxidized oils and acrylic or methacrylic acid may, for instance, be used as (modified) condensation polymers.

Vinyl polymers with allyl functionality: C = C - CH such as allyl(meth)acrylates or vinyl polymers with

drying oil functionality may, for instance, be used as vinyl addition polymers.

Linseed oil, soya bean oil, sunflower oil, safflower oil, tall oil and conjugated soya bean oil or epoxidized drying oils may, for instance, be used as drying oil instead of the polymer.

The resin composition according to the invention may be used by preference as such (substantially '100%-solid') as a binding agent for, for instance, paint.

It is also possible to use non-reactive solvents. As such, conventional solvents such as aromatic or aliphatic hydrocarbons with 6-25 carbon atoms may be used. Preferably the amount of solvent is less than 40 wt%, more in particular less than 20 wt% (based on the total amount of polymer and the ester). In practice, the amount of solvent chosen will often depend on economic (cost price) considerations.

The resin composition according to the invention can also be used as basic resin for alkyd dispersions.

The ester according to the invention comprises as carboxylic acid with 10-24 carbon atoms and at least one non-terminal ethylenically unsaturated double bond, for instance carboxylic acids or mixtures thereof with straight or branched chains such as 3-decenecarboxylic acid, 2-ethyldecenecarboxylic acid, dodecenecarboxylic acid, 4-ethyldodecenecarboxylic acid and fatty acids with 16-20 carbon atoms.

Preferably, fatty acids with 16-20 carbon atoms are used. Carboxylic acids with the structural unit: $-CH=CH-CH_2-CH=CH-$, are highly suitable because the diallylic hydrogen is easily eliminated under the influence of oxygen and, as such, acts as polymerization initiator.

According to a preferred embodiment of the invention the ester has the formula (4):

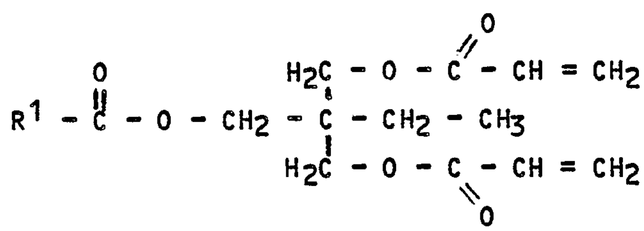 (4)

wherein $R^1$ is an alkyl radical with 16-20 carbon atoms, comprising the structural unit $-CH=CH-CH_2-CH=CH-$.

According to a preferred embodiment of the invention the resin composition contains as ester a compound with formula (5):

$- X - [O - R^4]_n$ (5)

where

n = 2-5

X = a polyol derivative, with by preference 2-20 carbon atoms and with a functionality of at least n + 1 and

$R^4$ = a (meth)acrylderivative according to formula (2) and/or (3).

1,1,1-trimethylolpropane, glycerol, pentaerythritol, sorbitol or 1,2,3-butanetriol may, by preference, be used as X.

$R^4$ may, for instance, also be derived from (meth)acrylic acid or a (meth)acrylic acid alkoxylated with 1-4 ethylene or propylene oxide (epoxy) units. Preferably (meth)acrylic acid or a (meth)acrylic acid alkoxylated with one unit is used.

$R^4$ may, for instance, also be derived from a styrene derivative, in particular 3-vinyl-phenol, 2-vinyl-phenol, 2-vinyl-1-benzol, alkoxylated vinyl-phenol and vinyl-benzenecarboxylic acid.

The ester can be prepared by, for instance, esterification of an unsaturated fatty acid or fatty acid chloride with a trimethylolpropanediacrylate or with glycerol diglycidyl ethylene phenol.

The resin composition according to the invention can be simply prepared by mixing the ester with the polymer.

The resin composition according to the invention may contain the usual additives such as siccatives, pigments and stabilizers.

The resin compositions according to the invention can be used as bases for, by preference airdryable paint compositions and in wall paints and wood paints.

The resin compositions according to the invention present a negligible emission of solvents if only the ester according to the invention is used as solvent and, in addition to the low solvent emission, they then also possess good coating properties, such as drying, curing resistance to solvents, resistance to abrasion, resistance to chemicals, flexibility, gloss and resistance to scratching.

The ester according to the invention ca be applied in compound which are curable by radical polymerization and in paint compositions which are airdryable.

The invention is elucidated with the following examples, without, however, being limited thereto.

## Examples

### Example I

Preparation of the ester

A four-necked flask with a volume of 3 litres equipped with a stirrer, nitrogen inlet, thermometer and a 'Dean and Stark' apparatus connected to a cooler was filled with 605 g (2.50 mol) of trimethylolpropanediacrylate and 680 g (2.43 mol) of soya bean fatty acid and 1300 g of toluene for the azeotropic removal of water.

Subsequently, 500 mg of phenothiazine and 100 mg of nitrobenzene were added, with stirring, and the mixture was heated to 55¤C. After this heating, 80 g of dry methanesulphonic acid was added and the mixture was heated further to 100-110¤C. The esterification was completed after 6 hours, after which 42 g of water had been distilled. After the mixture had cooled to room temperature, it was neutralized to a pH of 7 with NaOH (5% in water). The water layer was separated off and the organic layer was washed with distilled water. After addition of 100 mg of phenothiazine, the resulting organic phase was evaporated. The result was 1250 g of a dark yellow liquid.

The product obtained had the following properties:
acid number: 7.1
colour: 5 (Gardner)
viscosity: 1.0 dPa.s (Emila rotoviscometer at 23¤C).

### Example II

Paint composition

An air-drying paint composition with a high solids content was prepared by mixing 80 parts by weight of an alkyd based on soya bean fatty acid (oil length: 81 %; acid number: 8, viscosity 130 dPa.s at 25¤C) with 20 parts by weight of soya bean fatty acid ester of trimethylolpropanediacrylate. To this the following were added: 28.9 parts by weight of white spirit free from aromatics (boiling range 182-212¤C), 80 parts by weight of titanium dioxide, 3 parts by weight of 10% calcium decanate, 0.6 parts by weight of 10% cobalt decanate, 0.5 parts by weight of 10% zinc decanate, 2.0 parts by weight of 12% zirconium decanate and 1.5 parts by weight of methyl ethyl ketoxime as anti-skinning agent. The weight percentage of solids was 84% and the viscosity was 7.2 dPa.s (determined according to the ICI cone and plate method at 20¤C). The paint dried very well.

## Claims

1. Resin composition based on a polymer and an ester of an unsaturated fatty acid and an alcohol containing a terminal unsaturation, characterized in that, as ester, the resin composition contains a compound with formula (1):

$$R^1 - \overset{\overset{O}{\|}}{C} - O - R^2 \qquad (1)$$

where:

$R^1$ is an alkyl radical with 10-24 carbon atoms and at least one non-terminal ethylenically unsaturated bond and

$R^2$ is an organic group comprising two or more groups according to formulas (2) and/or (3):

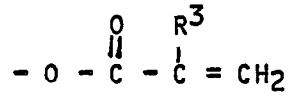 (2)

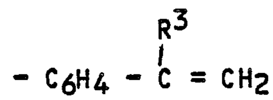 (3)

where:

$R^3$ is a hydrogen or an alkyl radical with 1-4 carbon atoms.

2. Resin composition according to claim 1, characterized in that, the resin composition is substantially 100%-solid.

3. Resin composition according to any one of claims 1-2, characterized in that the resin composition contains 20-99 wt% polymer and 1-80 wt% ester (the weight percentages being based on the total amount of polymer and ester).

4. Resin composition according to claim 3, characterized in that the resin composition contains 0,1-50% by weight of an oligomer.

5. Resin composition according to any one of claims 1-4, characterized in that the resin composition contains an alkyd resin as polymer.

6. Resin composition according to claim 5, characterized in that the alkyd resin is prepared in the presence of 3-20 wt% of a monoalcohol with between 5 and 13 carbon atoms.

7. Coating composition obtainable with the resin composition according to any of claims 1-6.

8. Compound with formula (1):

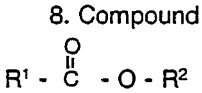 (1)

where:

$R^1$ is an alkyl radical with 10-24 carbon atoms and at least one non-terminal ethylenically unsaturated double bond and

$R^2$ is an organic group comprising two or more groups according to formulas (2) and/or (3):

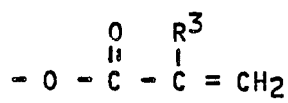 (2)

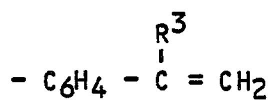 (3)

where:

$R^3$ is a hydrogen or an alkyl radical with 1-4 carbon atoms.

9. Compound according to formula (4):

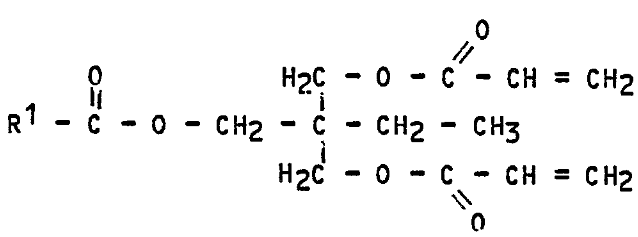 (4)

wherein $R^1$ is an alkyl radical with 16-20 carbon atoms, comprising the structural unit $-CH=CH-CH_2-CH=CH-$.

10. Application of a compound according to any one of claims 8-9 in a composition that can be cured by radical polymerization.

11. Application of a compound according to any one of claims 8-9 in an airdrying paint composition.